# EUROPEAN PATENT SPECIFICATION

(11) **EP 2 221 226 B1**
(45) Date of publication and mention of the grant of the patent: **04.01.2012**
(21) Application number: 10000770.7
(22) Date of filing: 26.01.2010
(51) Int. Cl.: B60W 30/18, F02N 11/08, B60W 10/06, B60W 10/26

(54) **Idle stop control apparatus and method thereof**
Leerlaufstoppsteuervorrichtung und Verfahren dafür
Appareil de contrôle de butée de ralenti et son procédé

(30) Priority: 24.02.2009 JP 2009040357; 19.11.2009 JP 2009264054
(43) Date of publication of application: 25.08.2010
(73) Proprietor: Nissan Motor Co., Ltd., Kanagawa 221-0023 (JP)
(72) Inventor: Takeda, Yasushi, Atsugi-shi Kanagawa 243-0123 (JP)
(74) Representative: Hager, Thomas Johannes

(56) References cited:
- JP-A- 58 140 434
- US-A1- 2003 022 755

## Description

### Field of the Invention

The present invention generally relates to a technology for controlling an idle stop system. More specifically, the present invention relates to an idle stop control apparatus and/or method for increasing a frequency of idle stoppages of a vehicle to improve the fuel efficiency of such a vehicle.

### Background Information

Known technology exists for determining if an idle stop should be executed by comparing a battery voltage to a threshold value. For example, Japanese Laid-Open Patent Publication No. H10-47105 discloses a technology for prohibiting an idle stop when a battery voltage is lower than a prescribed threshold voltage.
US 2003/0022755 A1 upon which the preamble of claim 1 is based, describes an electric control apparatus (ECU) permitting an automatic stop of an engine if there is vehicle speed historical data after the start of the engine when a predetermined automatic stop condition is satisfied. Even if there is no vehicle speed historical data, the ECU permits the automatic stop of the engine when the shift position of an automatic transmission is the parking position. Therefore, the frequency of the automatic stop of the engine is increased, which improves fuel efficiency.

It has been discovered that in some idle stop control apparatuses of recent years, an engine is restarted from an idle stop state using a starting device that starts the engine using a belt mechanism. This starting device is separate from an engine starter provided to start the engine in response to a start operation performed by a driver, such as when initially starting the engine. However, a conventional control apparatus like the one mentioned above cannot accurately determine if it is possible to restart the engine from an idle stop state using a starting device that restart the engine using a belt mechanism, because the conventional control apparatus makes the determination based merely on a battery voltage.

The solution of the object is achieved by the combination of features of claim 1 or 9. The dependent claims contain advantageous embodiments of the present invention. In view of the state of the known technology, one aspect of the present invention is to provide an idle stop control apparatus that includes a first starting device, a second starting device, a battery voltage detecting device, a storage device, a battery voltage estimating section and a control section. The first starting device starts an engine in response to a start operation performed by a driver by transmitting power to the engine. The second starting device starts the engine in response to a prescribed idle stop cancellation condition by transmitting power to the engine. The battery voltage detecting device detects a voltage of a battery serving to supply an electric current to the first and second starting devices. The storage device stores a voltage difference between a minimum voltage of the battery occurring when the engine was started by the first starting device and a minimum voltage of the battery occurring when the engine was started by the second starting device. The battery voltage estimating section estimates a minimum voltage of the battery expected to occur if the engine is started by the second starting device based on a voltage difference stored in the storage device and a minimum voltage of the battery detected by the battery voltage detecting device at a time when the engine was being started by the first starting device. The control section automatically stops the engine when a prescribed idle stop condition is satisfied. The control section further prohibits starting of the engine by the second starting device in response to the idle stop cancellation condition when an estimated minimum battery voltage estimated by the battery voltage estimating section is equal to or smaller than a prescribed battery voltage.

### BRIEF DESCRIPTION OF THE DRAWINGS

Referring now to the attached drawings which form a part of this original disclosure:

Figure 1 is a block diagram showing constituent components of an idle stop control apparatus according to a first embodiment;

Figure 2 is a flowchart showing control steps for detecting a voltage difference;

Figure 3 is a flowchart showing control steps of an idle stop control;

Figure 4 is a flowchart showing control steps of an idle stop control executed by an idle stop control apparatus according to a second embodiment;

Figure 5 is a block diagram showing constituent components of an idle stop control apparatus according to a third embodiment; and

Figure 6 is a flowchart showing control steps of an idle stop control executed by an idle stop control apparatus according to the third embodiment.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents.

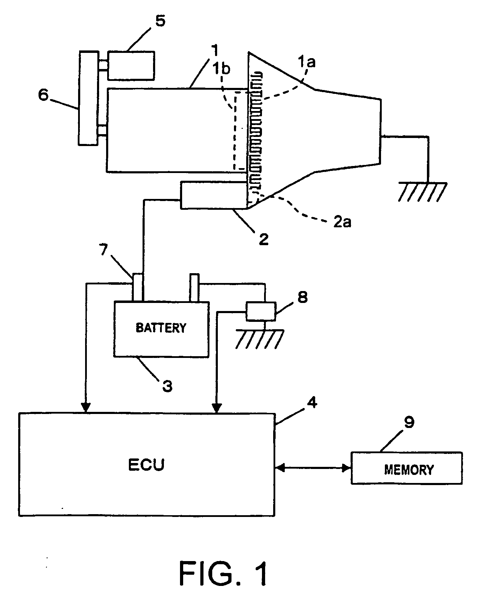

Referring initially to Figure 1, an idle stop control apparatus is illustrated in a block diagram to show constituent components in accordance with a first embodiment. The idle stop control apparatus is applied to an idle-stop vehicle (also called start-stop vehicle), in which an engine of the vehicle is automatically stopped (turned off) during temporary stops (e.g., when waiting at a traffic light) and restarted when the vehicle starts into motion again. The idle stop control apparatus mainly includes an engine 1, a starter motor 2, a battery 3, an electronic control unit or ECU 4 and a motor/generator 5. As explained below, the idle stop control apparatus selectively controls the starter motor 2 and the motor/generator 5 to increase a frequency of idle stoppages for improving fuel efficiency.

The engine 1 has a ring gear 1a and a flywheel 1b and a starter motor 2 having a pinion gear 2a. The starter motor 2 is contrived to mesh the pinion gear 2a with the ring gear 1a of the engine 1 and transfer power (torque) to the flywheel 1b in response to an engine start operation performed by a driver, thereby starting the engine 1. The motor/generator 5 is connected to the engine 1 with a belt mechanism 6. The motor/generator 5 functions either as an electric generator using the engine 1 as a drive source or as a motor serving to restart the engine 1 from an idle stop state. In this embodiment, the output of the motor/generator 5 is smaller than the output of the starter motor 2. In other words, the output of the motor/generator 5 when the motor/generator 5 restart the engine 1 from the idle stop state is smaller than the output of the starter motor 2 when the starter motor 2 starts the engine. For example, it is acceptable that the output of the motor/generator 5 is at the same level as the output of an alternator used for the normal vehicle. That is, in the case of the engine 1 restarts from the idle stop state, an unfavorable vibration and a noise are small compared to the case of the engine starts by the driver's operation. Therefore, when the large start torque is necessary to start the engine such as the cold engine startup, the starter motor 2 can start the engine surely. On the other hand, because the motor/generator 5 restarts the engine restarts from the idle state without the start operation by the driver, it can decrease a case that the driver has uncomfortable feelings caused by the vibration or the noise. The battery 3 serves to supply an electric current to the starter motor 2 and the motor/generator 5. A voltage sensor 7 detects a voltage of the battery 3 and feeds the detected voltage value to the ECU 4. The voltage sensor 7 constitutes a battery voltage detecting device that detects a voltage of the battery 3. A current sensor 8 detects a charge/discharge current of the battery 3 and feeds the detected current value to the ECU 4.

The idle stop control apparatus is provided with a memory or storage device 9 that serves to store data indicating voltage differences between minimum battery voltages occurring when the engine 1 was started by the starter motor 2 and minimum battery voltages occurring when the engine 1 was started by the motor/generator 5.

Basically, when a trip is initially started, the engine 1 of the vehicle is started by turning the vehicle ignition on with a key or other ignition starting device. The turning on of the ignition activates the ECU 4 and the starter motor 2, which constitutes a first starting device. Thus, the starter motor 2 cranks the engine 1. During the trip, the ECU 4 will automatically stop the engine 1 when a prescribed idle stop condition is satisfied. The ECU 4 constitutes a control section. The engine I is later started with the motor/generator 5 when the engine 1 is restarted from an idle stop state that was entered in response to the prescribed idle stop condition occurring after the initial start of the engine 1. The motor/generator 5 constitutes a second starting device that starts the engine 1 in response to a prescribed idle stop cancellation condition being met. The voltage of the battery 3 of the vehicle decrease by a different amount when the engine 1 is started with the starter motor 2 than when the engine 1 is restarted with the motor/generator 5.

As explained below, a voltage difference ΔV is determined based on the difference between a minimum battery voltage (peak value) V1 occurring at a time when the engine 1 was being started with the starter motor 2, during a previous trip (i.e., the last time the vehicle was driven) and a minimum battery voltage (peak value) V2 occurring at a time when the engine 1 was being started with the motor/generator 5 during a previous trip (i.e., the last time the vehicle was driven). The voltage difference ΔV is stored in a memory 9. Afterwards, a minimum battery minimum battery voltage (peak value) V1' occurring at a later time (during a current trip, i.e., during a drive that is still in progress) when the engine 1 was being started with the starter motor 2 is detected. Then, a minimum battery voltage expected to occur if the engine is restarted with the motor/generator 5 is estimated based on the voltage difference ΔV and the minimum battery voltage (peak value) V1' occurring when the engine 1 was started with the starter motor 2 (during a current trip, i.e., during a drive that is still in progress). The estimated minimum battery voltage is then used to determine whether or not the engine 1 can be restarted with the motor/generator 5. If the estimated minimum battery voltage is equal to or smaller than a prescribed battery voltage, then starting of the engine 1 with the motor/generator 5 in response to the idle stop cancellation condition is prohibited. It is possible that the minimum battery voltage (peak value) V1, the minimum battery voltage (peak value) V2 occurring during restarting with the motor/generator, and the minimum battery voltage (peak value) V1' occurring when the engine is started with the starter could be set at some time other than during a "previous trip" and a "current trip." In particular, it is possible that V 1 and V2 might be preset at the factory.

The ECU 4 serves to execute general control of the engine 1, including an idle stop control. In particular, the ECU 4 estimates a minimum battery voltage expected to occur if the engine 1 is started by the motor/generator 5 and determines if idle stoppage of the engine 1 should be permitted or prohibited based on the estimated minimum battery voltage. With the idle stop control apparatus, it is possible to determine whether or not the engine 1 can be restarted when the engine 1 is to be restarted from an idle stop state using the motor/generator 5 as a starting device for restarting the engine 1 through the belt mechanism 6. Thus, the routines of the ECU 4 that are used for estimating battery voltage constitute a battery voltage estimating section of the ECU 4.

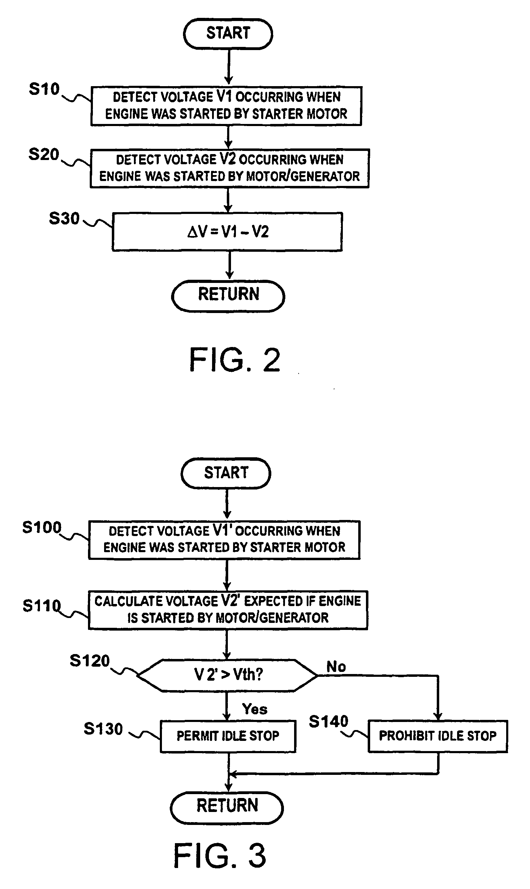

Figure 2 is a flowchart showing control steps of a voltage determination routine of an idle stop control program that is executed by the ECU 4 in order to detect a difference between a battery voltage occurring when the engine 1 was started by the starter motor 2 and a battery voltage occurring when the engine 1 was started by the motor/generator 5. The ECU 4 is powered up when the ignition of the vehicle is turned on. The ECU 4 starts executing the voltage determination routine of the idle stop control program when the vehicle is started.

In step S10, the ECU 4 detects a minimum battery voltage V1 occurring when the engine 1 was started by the starter motor 2. When the engine I is started, the battery 3 supplies an electric current to the starter motor 2 and the voltage of the battery 3 temporarily decreases by a large amount. The ECU 4 repeatedly acquires battery voltages detected by the voltage sensor 7. Then the ECU 4 selects the lowest battery voltage occurring while the engine 1 is being started by the starter motor 2 as the minimum battery voltage V1. The amount by which the battery voltage decreases while the engine 1 is being started differs depending on such factors as the mechanical and electrical loads occurring during cranking of the engine 1 and a degree of degradation of the battery 3.

In step S20, the ECU 4 detects a minimum battery voltage V2 occurring when the engine 1 was restarted by the motor generator 5 from an idle stop state. The ECU 4 repeatedly acquires battery voltages detected by the voltage sensor 7 and selects the lowest battery voltage occurring while the engine 2 is being restarted by the motor/generator 5 as the minimum battery voltage V2.

In step S30, the ECU 4 subtracts the minimum battery voltage V2 detected in step S20 from the minimum battery voltage V 1 detected in step S 10 to obtain a voltage difference ΔV (i.e., ΔV = V1 - V2). The voltage difference ΔV is stored in the memory 9. In the first embodiment, the voltage value ΔV is a fixed value that does not change during a period from when the engine 1 was started with the starter motor 2 until the engine 1 is to be restarted with the motor/generator 5.

Figure 3 is a flowchart showing control steps of an idle stop control routine of the idle stop control program that is executed by the ECU 4. The ECU 4 starts executing the idle stop control routine of the idle stop control program when the vehicle is started.

In step S 100, the ECU 4 detects a minimum battery voltage V1' occurring when the engine 1 was subsequently started by the starter motor 2. Similarly to the minimum battery voltages V1 and V2, the minimum battery voltage V1' is the lowest detected voltage to which the voltage of the battery 3 decreases while the engine 1 is being started.

In step S110, the ECU 4 calculates or estimates a minimum battery voltage V2' expected to occur if the engine 1 is restarted by the motor/generator 5. More specifically, the ECU 4 calculates a minimum battery voltage V2' expected to occur if the engine 1 is started by the motor/generator 5 by subtracting a voltage difference ΔV stored in the memory 9 from the minimum battery voltage V1' detected in step S100. The minimum battery voltage V2' is an estimated value of the minimum voltage expected to be reached by the battery 3 when the engine 1 is restarted by the motor/generator 5.

It is acceptable for the ECU 4 to use the latest voltage difference ΔV when two or more voltage differences ΔV are stored in the memory 9; it is also acceptable for the ECU 4 to use an average value of the voltage differences ΔV. When the ECU 4 calculates an average value of the voltage differences ΔV, it is also acceptable to use only a prescribed number of most recent voltage differences ΔV to calculate the average value.

In step S 120, the ECU 4 determines if the minimum battery voltage V2' calculated in step S 110 is larger than a prescribed threshold voltage Vth. The prescribed threshold voltage Vth is determined in advance experimentally. The prescribed threshold voltage Vth is set to a voltage value sufficient to ensure that the battery 3 can supply enough drive current to the motor/generator 5 to start the engine 1 or a voltage value sufficient to ensure that the ECU 4 can operate and will not undergo a reset. In this embodiment, the minimum battery voltage that will occur when the engine 1 is started with the motor/generator 5 can be estimated accurately in accordance with the performance characteristics of the battery 3, the degree of degradation of the battery 3 over time, and the performance characteristics of the motor/generator 5. Consequently, the threshold voltage Vth can be set without taking into account variations in the performance characteristics of the battery 3, degradation of the battery 3 over time, or variations in the performance characteristics of the motor/generator 5. If the minimum battery voltage V2' is determined to be larger than the prescribed threshold voltage Vth, then the ECU 4 proceeds to step S130. Otherwise, the minimum battery voltage V2' is determined to be equal to or smaller than the prescribed threshold voltage Vth, then the ECU 4 proceeds to step S 140.

In step S 130, the ECU 4 permits idle stoppage. As a result, the ECU 4 stops the engine 1 when a prescribed idle stop condition is satisfied (e.g., a brake pedal is depressed while the vehicle speed is 0 km/h). Also, the ECU 4 restarts the engine 1 with the motor/generator 5 when a prescribed idle stop cancellation condition (e.g., the brake pedal is released) while the vehicle is in an idle stop state.

Conversely, in step S140, the ECU 4 prohibits idle stoppage. More specifically, for example, the ECU 4 sets an idle stop prohibition flag so that it does not execute idle stoppage of the engine 1 even if the prescribed idle stop condition is satisfied.

In the idle stop control apparatus according to the first embodiment, a voltage difference ΔV between a minimum battery voltage occurring when the engine 1 was started by the starter motor 2 and a minimum battery voltage occurring when the engine 1 was started by the motor/generator 5 is calculated, and a minimum battery voltage expected to occur if the engine 1 is started by the motor/generator 5 is calculated based on the calculated voltage difference ΔV and a minimum battery voltage occurring when the engine 1 was started by the starter motor 2. If the calculated minimum battery voltage is higher than a prescribed threshold voltage Vth, then idle stoppage is permitted.

Meanwhile, if the calculated minimum battery voltage is equal to or smaller than a prescribed threshold voltage Vth, then idle stoppage is prohibited. In this way, a determination as to whether idle stoppage should be permitted or prohibited can be accomplished when the idle stop control apparatus has one starting device (starter motor 2) for starting an engine in response to a start operation performed by a driver and a different starting device (motor/generator 5) for starting the engine in response to a prescribed idle stop cancellation condition. More specifically, since a prescribed voltage difference ΔV exists between a minimum battery voltage occurring when the engine 1 was started by the starter motor 2 and a minimum battery voltage occurring when the engine 1 was started by the motor/generator 5, a minimum battery voltage expected to occur if the engine 1 is started by the motor/generator 5 can be estimated based on the voltage difference ΔV and a detected minimum battery voltage occurring when the engine 1 was started by the starter motor 2. The estimated (predicted) minimum battery voltage can then be used to determine if idle stoppage should be permitted or prohibited.

In this embodiment, a minimum battery voltage occurring when the engine 1 was started by the starter motor 2 and a minimum battery voltage occurring when the engine 1 was started by the motor/generator 5 are each detected with the voltage sensor 7 and used to determine a voltage difference ΔV. A minimum battery voltage expected to occur if the engine 1 is started by the motor/generator 5 is calculated based on the voltage difference ΔV and a minimum battery voltage occurring when the engine 1 was started by the starter motor 2. In this way, a minimum battery voltage expected to occur if the engine 1 is started by the motor/generator 5 can be estimated accurately in accordance with the performance and other characteristics of the battery 3 and the motor/generator 5. Also, even if the battery 3 has become degraded, a minimum battery voltage expected to occur if the engine 1 is started by the motor/generator 5 can be estimated in a manner that accommodates the degraded condition of the battery 3. Thus, the threshold voltage Vth can be set without taking into account variations in the performance characteristics of the battery 3, degradation of the battery 3 over time, or variations in the performance characteristics of the motor/generator 5. As a result, idle stoppage can be executed more frequently because a more accurate determination can be made as to whether or not the engine can be restarted with the motor/generator.

Although in this embodiment the voltage difference ΔV is calculated using a minimum battery voltage occurring when the engine 1 was started by the starter motor 2 and a minimum battery voltage occurring when the engine 1 was started by the motor/generator 5 (both minimum voltages being detected with the voltage sensor 7), it is also acceptable to use a fixed value stored in advance in the memory 9 as the voltage difference ΔV.

In this embodiment, idle stoppage is prohibited when the estimated minimum battery voltage V2' expected to occur if the engine 1 is started using the motor/generator 5 is equal to or smaller than the prescribed threshold voltage Vth. However, instead of prohibiting idle stoppage entirely, it is also acceptable to prohibit restarting of the engine 1 by the motor/generator 5 while allowing restarting of the engine 1 by the starter motor 2. In other words, when the idle stop cancellation condition occurs, starting of the engine 1 by the motor/generator 5 is prohibited if the estimated minimum battery voltage V2' expected to occur if the engine 1 is started using the motor/generator 5 is equal to or smaller than the prescribed threshold voltage Vth.

In the first embodiment, it is assumed that the voltage difference ΔV between the minimum battery voltage V1 occurring when the engine 1 was started by the starter motor 2 and the minimum battery voltage V2 occurring when the engine 1 was started by the motor/generator 5 does not change and the estimated minimum battery voltage V2' expected to occur if the engine 1 is started by the motor/generator 5 is calculated by subtracting the voltage difference ΔV from the minimum battery voltage V1' occurring when the engine 1 was started by the starter motor 2. However, if the battery 3 undergoes charging and/or discharging after the engine is started with the starter motor 2, then the voltage difference ΔV will change because a V-I characteristic of the battery 3 will change. An idle stop control apparatus according to a second embodiment revises the voltage difference ΔV based on a charge/discharge amount by which the battery 3 has been charged and/or discharged since the engine 1 was started by the starter motor 2. In other words, in the second embodiment, the voltage value of the voltage difference ΔV is revised based on a charge/discharge amount of the battery 3 during a period from when the engine 1 was started with the starter motor until the engine 1 is to be restarted with the motor/generator 5.

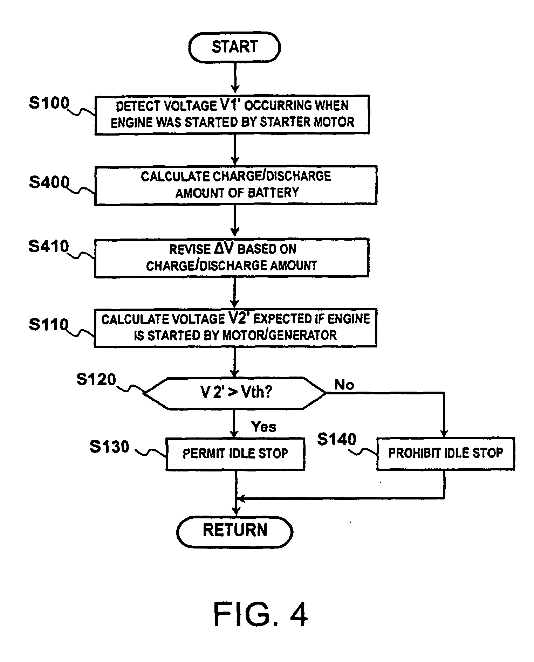

Figure 4 is a flowchart showing control steps of an idle stop control routine of the idle stop control program that is executed by the ECU 4 of the idle stop control apparatus according to the second embodiment. Steps that are the same as the steps of the flowchart shown in Figure 3 are indicated with the same reference numerals and explanations thereof are omitted. The ECU 4 starts executing step S100 when the vehicle is started.

In step S 100, the ECU 4 detects a minimum battery voltage V1' occurring when the engine 1 was started by the starter motor 2 and proceeds to step S400. In step S400, the ECU 4 calculates a charge/discharge amount of the battery 3 based on a charge current and a discharge current detected by the current sensor 8 using a known method, such as integrating a cumulative amount of current flowing to all onboard devices while the vehicle is running.

In step S410, the ECU 4 reads a voltage difference ΔV stored in the memory 9 and revises the voltage difference ΔV based on the charge/discharge amount calculated in step S400. More specifically, the voltage difference ΔV is revised to a smaller value when the battery 3 has been charged by a larger amount than it has been discharged, i.e., when a net charge amount has been calculated in step S400. Conversely, the voltage difference ΔV is revised to a larger value when the battery 3 has been discharged by a larger amount than it has been charged, i.e., when a net discharge amount has been calculated in step S400.

In the case of a net charge amount, as the net charge amount becomes larger, the degree to which the voltage difference ΔV is decreased becomes larger. Likewise, in the case of a net discharge amount, as the net discharge amount becomes larger, the degree to which the voltage difference ΔV is increased becomes larger. It is acceptable to, for example, prepare a table of data correlating charge/discharge amounts with revision amounts for revising the voltage difference ΔV and to revise the voltage difference ΔV by referring to the data table based on the charge/discharge amount calculated in step S400 and finding the corresponding revision amount for the voltage difference ΔV.

The step S 110 and subsequent steps are the same as the step S110 and subsequent steps of the flowchart shown in Figure 3.

In the idle stop control apparatus according to the second embodiment, a voltage difference ΔV between a minimum battery voltage occurring when the engine I was started by the starter motor 2 and a minimum battery voltage occurring when the engine 1 was started by the motor/generator 5 is revised based on a charge/discharge amount of the battery 3. Consequently, the minimum battery voltage V2' expected to occur if the engine 1 is started by the motor/generator 5 can be estimated even more accurately because a state of the battery 3 is taken into account. As a result, idle stoppage can be executed even more frequently because the threshold value Vth can be set without taking into account a state of charge of the battery 3.

In the first embodiment, it is assumed that the voltage difference ΔV between the minimum battery voltage V1 occurring when the engine 1 was started by the starter motor 2 and the minimum battery voltage V2 occurring when the engine 1 was started by the motor/generator 5 does not change and the estimated minimum battery voltage V2' expected to occur if the engine 1 is started by the motor/generator 5 is calculated by subtracting the voltage difference ΔV from the minimum battery voltage V1' occurring when the engine 1 was started by the starter motor 2. However, if the battery 3 undergoes a temperature change after the engine is started with the starter motor 2, then the voltage difference ΔV will change because a V-I characteristic of the battery 3 will change. An idle stop control apparatus according to a third embodiment revises the voltage difference ΔV based on an amount by which a temperature of the battery 3 has changed since the engine 1 was started by the starter motor 2. In other words, in the third embodiment, the voltage value of the voltage difference ΔV is revised based on a temperature change of the battery 3 during a period from when the engine 1 was started with the starter motor until the engine 1 is to be restarted with the motor/generator 5.

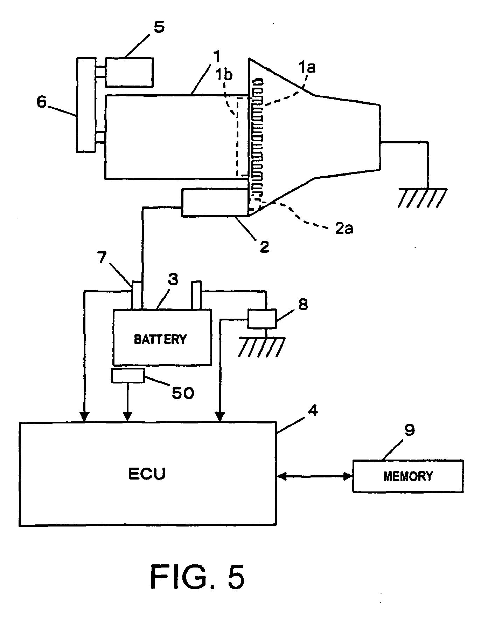

Figure 5 is a block diagram showing constituent components of an idle stop control apparatus according to the third embodiment. The idle stop control apparatus according to the third embodiment differs from an idle stop control apparatus according to the first embodiment shown in Figure 1 in that the third embodiment further includes a temperature sensor 50 for detecting a temperature of the battery 3. Instead of using a temperature sensor 50, it is also acceptable to provide an intake air temperature sensor in the engine 1 and estimate the battery temperature based on a temperature value detected by the intake air temperature sensor.

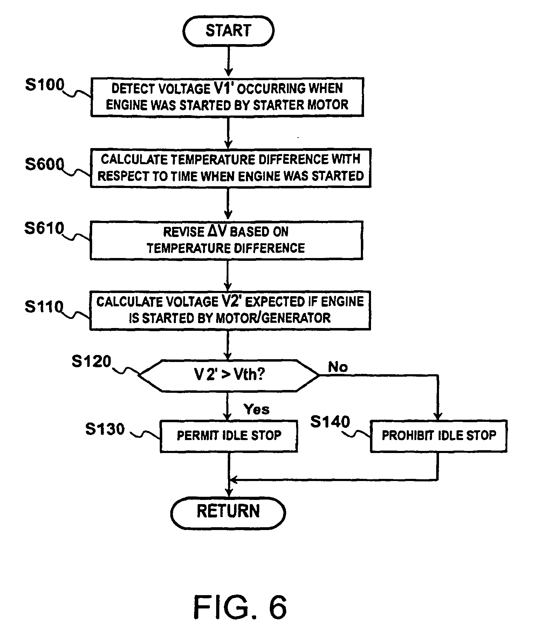

Figure 6 is a flowchart showing control steps of an idle stop control routine of the idle stop control program that is executed by the ECU 4 of the idle stop control apparatus according to the third embodiment. Steps that are the same as the steps of the flowchart shown in Figure 3 are indicated with the same reference numerals and explanations thereof are omitted. The ECU 4 starts executing step S100 when the vehicle is started.

In step S 100, the ECU 4 detects a minimum battery voltage V1' occurring when the engine 1 was started by the starter motor 2 and proceeds to step S600. In step S600, the ECU 4 calculates a temperature difference ΔT between a first battery temperature T1 detected by the temperature sensor 50 when the engine 1 was started by the starter motor 2 and a second battery temperature T2 detected by the temperature sensor 50 at a later time (ΔT = T2 - T1). Since the processing shown in the flowchart of Figure 6 is executed repeatedly, the second battery temperature T2 is detected by the temperature sensor 50 and updated every time the step S600 is executed.

In step S610, the ECU 4 reads a voltage difference ΔV stored in the memory 9 and revises the voltage difference ΔV based on the temperature difference ΔT calculated in step S600. More specifically, as the temperature difference ΔT becomes larger, the value to which the voltage ΔV is revised becomes smaller.

The step S 110 and subsequent steps are the same as the step S 110 and subsequent steps of the flowchart shown in Figure 3.

In the idle stop control apparatus according to the second embodiment, a voltage difference ΔV between the minimum battery voltage occurring when the engine 1 was started by the starter motor 2 and the minimum battery voltage occurring when the engine 1 was started by the motor/generator 5 is revised based on a temperature change amount of the battery 3. Consequently, the minimum battery voltage V2' expected to occur if the engine 1 is started by the motor/generator 5 can be estimated even more accurately because a state of the battery 3 is taken into account. As a result, idle stoppage can be executed even more frequently because the threshold value Vth can be set without taking into account a temperature change of the battery 3.

While only selected embodiments have been chosen to illustrate the present invention, it will be apparent to those skilled in the art from this disclosure that various changes and modifications can be made herein without departing from the scope of the invention as defined in the appended claims. Thus, the idle stop control apparatus of the present invention is not limited to the first to third embodiments explained heretofore. For example, in the previously explained embodiment, the voltage difference ΔV is calculated by subtracting a minimum battery voltage V2 occurring when the engine 1 was started by the motor/generator 5 from the minimum battery voltage V 1 occurring when the engine 1 was started by the starter motor 2 because it is assumed that the battery voltage decreased by a larger amount when the engine 1 was started by the motor/generator 5 than when the engine 1 was started by the starter motor 2. However, if the battery voltage decreased by a larger amount when the engine 1 was started by the motor/generator 5 than when the engine 1 was started by the starter motor 2, then the voltage difference ΔV is calculated by subtracting the minimum battery voltage V1 occurring when the engine 1 was started by the starter motor 2 from the minimum battery voltage V2 occurring when the engine 1 was started by the motor/generator 5 and the minimum battery voltage V2' expected to occur if the engine 1 is started by the motor/generator 5 is calculated by adding the minimum battery voltage V1' occurring when the engine 1 was started by the starter motor 2 to the voltage difference ΔV. In such a case, if the battery 3 has undergone a net charge since the engine 1 was started by the starter motor 2, then the voltage difference ΔV is increased (revised to a larger value) in accordance with the size of the net charge amount of the battery 3. Conversely, if the battery 3 has undergone a net discharge since the engine 1 was started by the starter motor 2, then the voltage difference ΔV is decreased (revised to a smaller value) in accordance with the size of the net discharge amount of the battery 3. Similarly, the voltage difference can be increased (revised to a larger value) in accordance with the size of the temperature change amount ΔT of the battery 3 occurring since (after) the engine 1 was started by the starter motor 2. Thus, the foregoing descriptions of the embodiments according to the present invention are provided for illustration only, and not for the purpose of limiting the invention as defined by the appended claims.

## Claims

1. An idle stop control apparatus comprising:
a first starting device (2) that starts an engine (1) in response to a start operation performed by a driver by transmitting power to the engine (1);
a second starting device (5) that starts the engine (1) in response to a prescribed idle stop cancellation condition by transmitting power to the engine (1);
a battery voltage detecting device (2) that detects a voltage of a battery (3) serving to supply an electric current to the first and second starting devices (2, 5); and
a control section (4) that automatically stops the engine (1) when a prescribed idle stop condition is satisfied, **characterized by**
a storage device (9) that stores a voltage difference between a minimum voltage of the battery (3) occurring when the engine (1) was started by the first starting device (2) and a minimum voltage of the battery (3) occurring when the engine (1) was started by the second starting device (5); and
a battery voltage estimating section (4) that estimates a minimum voltage of the battery (3) expected to occur if the engine (1) is started by the second starting device (5) based on the voltage difference stored in the storage device (9) and a minimum voltage of the battery (1) detected by the battery voltage detecting device (7) at a time when the engine (1) was being started by the first starting device (2);
wherein said control section (4) further prohibits starting of the engine (1) by the second starting device (5) in response to the idle stop cancellation condition when the estimated minimum battery voltage estimated by the battery voltage estimating section (4) is equal to or smaller than a prescribed battery voltage.

2. The idle stop control apparatus as recited in claim 1, further comprising
a voltage difference calculating section that calculates a voltage difference between a minimum voltage of the battery (3) detected by the battery voltage detecting device (7) at a time when the engine (1) was being started by the first starting device (2) and a minimum voltage of the battery ('3) detected by the battery voltage detecting device (7) at a time when the engine (1) was being started by the second starting device (5), with the storage device (9) storing the voltage difference calculated by the voltage difference calculating section.

3. The idle stop control apparatus as recited in claim 1, further comprising
a charge/discharge amount calculating section that calculates a charge/discharge amount of the battery (3); and
a voltage difference revising section that revises the voltage difference that was stored based on an amount by which battery (3) has been charged and/or discharged since the engine (1) was started by the first starting device (2),
the battery voltage estimating section (4) estimating the minimum voltage of the battery (3) expected to occur if the engine (1) is started by the second starting device (2) based on a revised voltage difference obtained by the voltage difference revising section and the minimum voltage of the battery (3) detected by the battery voltage detecting device at a time when the engine (1) was started by the first starting device (2).

4. The idle stop control apparatus as recited in claims 3, wherein
the voltage difference revising section decreases the voltage difference if an amount by which the battery (3) has been charged since the engine (1) was started by the first starting device (2) is larger than an amount by which the battery (3) has been discharged and increases the voltage difference if an amount by which the battery (3) has been discharged since the engine (1) was started by the first starting device (2) is larger than an amount by which the battery (3) has been charged, when an amount by which the voltage of the battery (3) decreased when the engine (1) was started by the second starting device (5) is larger than an amount by which the voltage of the battery (3) decreased when the engine was started by the first starting device (2).

5. The idle stop control apparatus as recited in claim 4, wherein
the voltage difference revising section increases a degree to which the voltage difference revising section decreases the voltage difference in accordance with the amount by which the battery (3) has been charged since the engine (1) was started by the first starting device (2), when the voltage difference revising section decreases the voltage difference, and
the voltage difference revising section increases a degree to which the voltage difference revising section increases the voltage difference in accordance with the amount by which the battery (3) has been discharged since the engine (1) was started by the first starting device (2), when the voltage difference revising section increases the voltage difference.

6. The idle stop control apparatus as recited in claim 1, further comprising
a battery temperature detecting section that detects a temperature of the battery (3);
a battery temperature change amount calculating section that calculates an amount by which the temperature of the battery (3) has changed since the engine (1) was started by the first starting device (2); and
a voltage difference revising section that revises the voltage difference that was stored based on an amount by which the temperature of the battery (3) has changed,
the battery voltage estimating section estimating the minimum voltage of the battery expected to occur if the engine (1) is started by the second starting device (5) based on a revised voltage difference obtained by the voltage difference revising section and the minimum voltage of the battery (3) detected by the battery voltage detecting device (7) at a time when the engine (1) was being started by the first starting device (2).

7. The idle stop control apparatus as recited in claim 6, wherein
the voltage difference revising section decreases the voltage difference such that as an amount by which the temperature of the battery (3) has changed becomes larger, the voltage difference is decreased becomes larger, when an amount by which the voltage of the battery (3) decreased when the engine (1) was started by the second starting device (5) is larger than an amount by which the voltage of the battery (3) decreased when the engine (1) was started by the first starting device (2).

8. The idle stop control apparatus as recited in claim 1, wherein
the second starting device (5) that starts the engine (1) by transmitting power to the engine (1) through a belt mechanism.

9. An idle stop control method that automatically stop an engine (1) when a prescribed idle stop condition is satisfied, comprising:
storing a voltage difference between a minimum voltage of a battery (3) occurring when an engine (1) was started by a first starting device (2) that starts the engine (1) in response to a start operation performed by a driver by transmitting power to the engine (1) and a minimum voltage of the battery (3) occurring when the engine (1) was started by a second starting device (5) that starts the engine (1) in response to a prescribed idle stop cancellation condition by transmitting power to the engine (1);
estimating a minimum voltage of the battery (3) expected to occur when the engine (1) is started with the second starting device (3) based on the stored voltage difference and the minimum voltage of the battery (3) detected at a time when the engine (1) was being started by the first starting device (2); and
prohibiting starting of the engine (1) by the second starting device (5) in response to the idle stop cancellation condition if the estimated minimum battery voltage is equal to or smaller than a prescribed battery voltage.

## Patentansprüche

1. Leerlaufstopp-Steuervorrichtung, umfassend:
eine erste Startvorrichtung (2), die einen Verbrennungsmotor (1) in Reaktion auf eine von einem Fahrer durchgeführte Startbetätigung startet, indem Leistung zum Verbrennungsmotor (1) übertragen wird;
eine zweite Startvorrichtung (5), die den Verbrennungsmotor (1) in Reaktion auf eine vorbestimmte Leerlaufstopp-Beendigungsbedingung startet, indem Leistung zum Verbrennungsmotor (1) übertragen wird;
eine Batteriespannungs-Erfassungsvorrichtung (2), die eine Spannung einer Batterie (3), die dazu dient, einen elektrischen Strom zur ersten und zweiten Startvorrichtung (2, 5) zuzuführen, erfasst; und
einen Steuerabschnitt (4), der den Verbrennungsmotor (1) automatisch stoppt, wenn eine vorbestimmte Leerlaufstoppbedingung erfüllt ist, **gekennzeichnet durch**
eine Speichervorrichtung (9), die eine Spannungsdifferenz zwischen einer Minimalspannung der Batterie (3), die auftritt, wenn der Verbrennungsmotor (1) von der ersten Startvorrichtung (2) gestartet wurde, und einer Minimalspannung der Batterie (3), die auftritt, wenn der Verbrennungsmotor (1) von der zweiten Startvorrichtung (5) gestartet wurde, speichert; und
einen Batteriespannungs-Abschätzabschnitt (4), der eine Minimalspannung der Batterie (3), von der erwartet wird, dass sie auftritt, wenn der Verbrennungsmotor (1) von der zweiten Startvorrichtung (5) gestartet wird, auf der Grundlage der in der Speichervorrichtung (9) gespeicherten Spannungsdifferenz und einer Minimalspannung der Batterie (3), die von der Batteriespannungs-Erfassungsvorrichtung (7) zu einem Zeitpunkt erfasst wird, an dem der Verbrennungsmotor (1) von der ersten Startvorrichtung (2) gestartet wurde, abschätzt;
wobei der Steuerabschnitt (4) ferner ein Starten des Verbrennungsmotors (1) durch die zweite Startvorrichtung (5) in Reaktion auf die Leerlaufstopp-Beendigungsbedingung verhindert, wenn die geschätzte minimale Batteriespannung, die von dem Batteriespannungs-Abschätzabschnitt (4) geschätzt wurde, gleich oder kleiner einer vorbestimmten Batteriespannung ist.

2. Leerlaufstopp-Steuervorrichtung nach Anspruch 1, ferner umfassend einen Spannungsdifferenz-Berechnungsabschnitt, der eine Spannungsdifferenz zwischen einer Minimalspannung der Batterie (3), die von der Batteriespannungs-Erfassungsvorrichtung (7) zu einem Zeitpunkt, an dem der Verbrennungsmotor von der ersten Startvorrichtung (2) gestartet wurde, erfasst wird, und einer Minimalspannung der Batterie (3), die von der Batteriespannungs-Erfassungsvorrichtung (7) zu einem Zeitpunkt, an dem der Verbrennungsmotor (1) von der zweiten Startvorrichtung (5) gestartet wurde, erfasst wird, berechnet, wobei die Speichervorrichtung (9) die von dem Spannungsdifferenz-Berechnungsabschnitt berechnete Spannungsdifferenz speichert.

3. Leerlaufstopp-Steuervorrichtung nach Anspruch 1, ferner umfassend:
einen Lade/Entlademengen-Berechnungsabschnitt, der eine Lade/Entlademenge der Batterie (3) berechnet; und
einen Spannungsdifferenz-Überprüfungsabschnitt, der die Spannungsdifferenz, die gespeichert wurde, auf der Grundlage eines Betrages, um den die Batterie (3) geladen und/oder entladen wurde, seit der Verbrennungsmotor (1) von der ersten Startvorrichtung (2) gestartet wurde, überprüft,
wobei der Batteriespannungs-Abschätzabschnitt (4) die Minimalspannung der Batterie (3), von der erwartet wird, dass sie auftritt, wenn der Verbrennungsmotor (1) von der zweiten Startvorrichtung (5) gestartet wurde, auf der Grundlage einer überprüften Spannungsdifferenz, die von dem Spannungsdifferenz-Überprüfungsabschnitt erhalten wird, und der Minimalspannung der Batterie (3),
die von der Batteriespannungs-Erfassungsvorrichtung zu einem Zeitpunkt, an dem der Verbrennungsmotor (1) von der ersten Startvorrichtung (2) gestartet wurde, erfasst wird, abschätzt.

4. Leerlaufstopp-Steuervorrichtung nach Anspruch 3, wobei
der Spannungsdifferenz-Überprüfungsabschnitt die Spannungsdifferenz verringert, wenn ein Betrag, um den die Batterie (3) geladen wurde, seit der Verbrennungsmotor (1) von der ersten Startvorrichtung (2) gestartet wurde, größer ist als ein Betrag, um den die Batterie (3) entladen wurde, und die Spannungsdifferenz erhöht, wenn ein Betrag, um den die Batterie (3) entladen wurde, seit der Verbrennungsmotor (1) von der ersten Startvorrichtung (2) gestartet wurde, größer ist als ein Betrag, um den die Batterie (3) geladen wurde, wenn ein Betrag, um den die Spannung der Batterie (3) verringert wurde, wenn der Verbrennungsmotor (1) von der zweiten Startvorrichtung (5) gestartet wurde, größer ist als ein Betrag, um den die Spannung der Batterie (3) verringert wurde, wenn der Verbrennungsmotor von der ersten Startvorrichtung (2) gestartet wurde.

5. Leerlaufstopp-Steuervorrichtung nach Anspruch 4, wobei
der Spannungsdifferenz-Überprüfungsabschnitt ein Ausmaß, auf das der Spannungsdifferenz-Überprüfungsabschnitt die Spannungsdifferenz verringert, gemäß dem Betrag, um den die Batterie (3) geladen wurde, seit der Verbrennungsmotor (1) von der ersten Startvorrichtung (2) gestartet wurde, erhöht, wenn der Spannungsdifferenz-Überprüfungsabschnitt die Spannungsdifferenz verringert, und
der Spannungsdifferenz-Überprüfungsabschnitt ein Ausmaß, auf das der Spannungsdifferenz-Überprüfungsabschnitt die Spannungsdifferenz erhöht, gemäß dem Betrag, um den die Batterie (3) entladen wurde, seit der Verbrennungsmotor (1) von der ersten Startvorrichtung (2) gestartet wurde, erhöht, wenn der Spannungsdifferenz-Überprüfungsabschnitt die Spannungsdifferenz vergrößert.

6. Leerlaufstopp-Steuervorrichtung nach Anspruch 1, ferner umfassend
einen Batterietemperatur-Erfassungsabschnitt, der eine Temperatur der Batterie (3) erfasst;
einen Batterietemperatur-Veränderungsbetrag-Berechnungsabschnitt, der einen Betrag, um den sich die Temperatur der Batterie (3) verändert hat, seit der Verbrennungsmotor (1) von der ersten Startvorrichtung (2) gestartet wurde, berechnet; und
einen Spannungsdifferenz-Überprüfungsabschnitt, der die Spannungsdifferenz, die gespeichert wurde, auf der Grundlage eines Betrages, um den die Temperatur der Batterie (3) sich verändert hat, überprüft,
wobei der Batteriespannungs-Abschätzabschnitt die Minimalspannung der Batterie, von der erwartet wird, dass sie auftritt, wenn der Verbrennungsmotor (1) von der zweiten Startvorrichtung (2) gestartet wurde, auf der Grundlage einer überprüften Spannungsdifferenz, die von dem Spannungsdifferenz-Überprüfungsabschnitt erhalten wird, und der Minimalspannung der Batterie (3), die von der Batteriespannungs-Erfassungsvorrichtung (7) zu einem Zeitpunkt, an dem der Verbrennungsmotor (1) von der ersten Startvorrichtung (2) gestartet wurde, erfasst wird, abschätzt.

7. Leerlaufstopp-Steuervorrichtung nach Anspruch 6, wobei der Spannungsdifferenz-Überprüfungsabschnitt die Spannungsdifferenz so verringert, dass wenn ein Betrag, um den die Temperatur der Batterie (3) sich verändert hat, größer wird, die verringerte Spannungsdifferenz größer wird, wenn ein Betrag, um den die Spannung der Batterie (3) verringert wird, wenn der Verbrennungsmotor (1) von der zweiten Startvorrichtung (5) gestartet wurde, größer ist als ein Betrag, um den die Spannung der Batterie (3) verringert wird, wenn der Verbrennungsmotor (1) von der ersten Startvorrichtung (2) gestartet wurde.

8. Leerlaufstopp-Steuervorrichtung nach Anspruch 1, wobei die zweite Startvorrichtung (5) den Verbrennungsmotor (1) startet, indem Leistung über einen Riemenmechanismus zum Verbrennungsmotor (1) übertragen wird.

9. Leerlaufstopp-Steuerverfahren, das einen Verbrennungsmotor (1) automatisch stoppt, wenn eine vorbestimmte Leerlaufstoppbedingung erfüllt ist, umfassend:
Speichern einer Spannungsdifferenz zwischen einer Minimalspannung einer Batterie (3), die auftritt, wenn ein Verbrennungsmotor (1) von einer ersten Startvorrichtung (2) gestartet wurde, die den Verbrennungsmotor (1) in Reaktion auf eine von einem Fahrer durchgeführte Startbetätigung startet, indem Leistung zum Verbrennungsmotor (1) übertragen wird, und einer Minimalspannung der Batterie (3), die auftritt, wenn der Verbrennungsmotor (1) von einer zweiten Startvorrichtung (5) gestartet wurde, die den Verbrennungsmotor (1) in Reaktion auf eine vorbestimmte Leerlaufstopp-Beendigungsbedingung startet, indem Leistung zum Verbrennungsmotor (1) übertragen wird;
Abschätzen einer Minimalspannung der Batterie (3), von der erwartet wird, dass sie auftritt, wenn der Verbrennungsmotor (1) mit der zweiten Startvorrichtung (5) gestartet wird, auf der Grundlage der gespeicherten Spannungsdifferenz und der Minimalspannung der Batterie (3), die zu einem Zeitpunkt erfasst wird, an dem der Verbrennungsmotor (1) von der ersten Startvorrichtung (2) gestartet wurde; und
Verhindern des Startens des Verbrennungsmotors (1) durch die zweite Startvorrichtung (5) in Reaktion auf die Leerlaufstopp-Beendigungsbedingung, wenn die geschätzte minimale Batteriespannung gleich oder kleiner einer vorbestimmten Batteriespannung ist.

## Revendications

1. Appareil de commande d'arrêt au ralenti comprenant :
un premier dispositif de démarrage (2) qui démarre un moteur (1) en réponse à une opération de démarrage effectuée par un conducteur par transmission d'énergie au moteur (1) ;
un deuxième dispositif de démarrage (5) qui démarre le moteur (1) en réponse à une condition d'annulation d'arrêt au ralenti prescrite par la transmission de puissance au moteur (1) ;
un dispositif de détection de tension de batterie (2) qui détecte une tension d'une batterie (3) servant à alimenter un courant électrique aux premier et deuxième dispositifs de démarrage (2, 5) ; et
une section de commande (4) qui arrête automatiquement le moteur (1) lorsqu'une condition d'arrêt au ralenti prescrite est satisfaite, **caractérisé par**
un dispositif de stockage (9) qui stocke une différence de tension entre une tension minimale de la batterie (3) survenant lorsque le moteur (1) est démarré par le premier dispositif de démarrage (2) et une tension minimale de la batterie (3) survenant lorsque le moteur (1) est démarré par le deuxième dispositif de démarrage (5) ; et
une section d'estimation de tension de batterie (4) qui estime une tension minimale de la batterie (3) prévue pour survenir si le moteur (1) est démarré par le deuxième dispositif de démarrage (5) sur la base de la différence de tension stockée dans le dispositif de stockage (9) et une tension minimale de la batterie (1) détectée par le dispositif de détection de tension de batterie (7) à un temps auquel le moteur (1) est démarré par le premier dispositif de démarrage (2) ;
où ladite section de commande (4) interdit en outre le démarrage du moteur (1) par le deuxième dispositif de démarrage (5) en réponse à la condition d'annulation d'arrêt au ralenti lorsque la tension de batterie minimale estimée par la section d'estimation de tension de batterie (4) est égale à ou inférieure à une tension de batterie prescrite.

2. Appareil de commande d'arrêt au ralenti selon la revendication 1, comprenant en outre une section de calcul de différence de tension qui calcule une différence de tension entre une tension minimale de la batterie (3) détectée par le dispositif de détection de tension de batterie (7) à un temps auquel le moteur (1) a été démarré par le premier dispositif de démarrage (2) et une tension minimale de la batterie (3) détectée par le dispositif de détection de tension de batterie (7) à un temps auquel le moteur (1) est démarré par le deuxième dispositif de démarrage (5), le dispositif de stockage (9) stockant la différence de tension calculée par la section de calcul de différence de tension.

3. Appareil de commande d'arrêt au ralenti selon la revendication 1, comprenant en outre
une section de calcul de quantité de charge/décharge qui calcule une quantité de charge/décharge de la batterie (3) ; et
une section de révision de différence de tension qui révise la différence de tension qui a été stockée sur la base d'une quantité de laquelle la batterie (3) a été chargée et/ou déchargée depuis que le moteur (1) a été démarré par le premier dispositif de démarrage (2),
la section d'estimation de tension de batterie (4) estimant la tension minimale de la batterie (3) prévue pour survenir si le moteur (1) est démarré par le deuxième dispositif de démarrage (2) sur la base d'une différence de tension révisée obtenue par la section de révision de différence de tension et la tension minimale de la batterie (3) détectée par le dispositif de détection de tension de batterie à un temps auquel le moteur (1) a été démarré par le premier dispositif de démarrage (2).

4. Appareil de commande d'arrêt au ralenti selon la revendication 3, dans lequel
la section de révision de différence de tension diminue la différence de tension si la quantité de laquelle la batterie (3) a été chargée depuis que le moteur (1) a été démarré par le premier dispositif de démarrage (2) est supérieure à une quantité de laquelle la batterie (3) a été déchargée et augmente la différence de tension si la quantité de laquelle la batterie (3) a été déchargée depuis que le moteur (1) a été démarré par le premier dispositif de démarrage (2) est supérieure à une quantité de laquelle la batterie (3) a été chargée, lorsque la quantité de laquelle la tension de la batterie (3) a diminué lorsque le moteur (1) a été démarré par le deuxième dispositif de démarrage (5) est supérieure à la quantité de laquelle la tension de la batterie (3) a diminué lorsque le moteur a été démarré par le premier dispositif de démarrage (2).

5. Appareil de commande d'arrêt au ralenti selon la revendication 4, dans lequel
la section de révision de différence de tension augmente un degré auquel la section de révision de différence de tension diminue la différence de tension en fonction de la quantité de laquelle la batterie (3) a été chargée depuis que le moteur (1) a été démarré par le premier dispositif de démarrage (2), lorsque la section de révision de différence de tension diminue la différence de tension, et
la section de révision de différence de tension augmente le degré auquel la section de révision de différence de tension augmente la différence de tension en fonction de la quantité de laquelle la batterie (3) a été déchargée depuis que le moteur (1) a été démarré par le premier dispositif de démarrage (2), lorsque la section de révision de différence de tension augmente la différence de tension.

6. Appareil de commande d'arrêt au ralenti selon la revendication 1, comprenant en outre
une section de détection de température de batterie qui détecte la température de la batterie (3) ;
un section de calcul de changement de température de batterie qui calcule la quantité de laquelle la température de la batterie (3) a changé depuis que le moteur (1) a été démarré par le premier dispositif de démarrage (2) ; et
une section de révision de différence de tension qui révise la différence de tension qui a été stockée sur la base de la quantité de laquelle la température de la batterie (3) a changé,
la section d'estimation de tension de batterie estimant la tension minimale de la batterie prévue pour survenir si le moteur (1) est démarré par le deuxième dispositif de démarrage (5) sur la base d'une différence de tension révisée obtenue par la section de révision de différence de tension et la tension minimale de la batterie (3) détectée par le dispositif de détection de tension de batterie (7) à un temps auquel le moteur (1) a été démarré par le premier dispositif de démarrage (2).

7. Appareil de commande d'arrêt au ralenti selon la revendication 6, dans lequel
la section de révision de différence de tension diminue la différence de tension de sorte que lorsque la quantité de laquelle la température de la batterie (3) a changé devient plus élevée, la différence de tension est diminuée devient plus grande, lorsqu'une quantité de laquelle la tension de la batterie (3) diminue lorsque le moteur (1) est démarré par le deuxième dispositif de démarrage (5) est plus grande qu'une quantité de laquelle la tension de la batterie (3) diminue lorsque le moteur (1) est démarré par le premier dispositif de démarrage (2).

8. Appareil de commande d'arrêt au ralenti selon la revendication 1, dans lequel
le deuxième dispositif de démarrage (5) qui démarre le moteur (1) par transmission d'énergie au moteur (1) par l'intermédiaire d'un mécanisme à courroie.

9. Procédé de commande d'arrêt au ralenti qui arrête automatiquement un moteur (1) lorsqu'une condition prescrite d'arrêt au ralenti est satisfaite, comprenant :
le stockage d'une différence de tension entre une tension minimale d'une batterie (3) survenant lorsqu'un moteur (1) est démarré par un premier dispositif de démarrage (2) qui démarre le moteur (1) en réponse à une opération de démarrage effectuée par un conducteur par transmission d'énergie au moteur (1) et une tension minimale de la batterie (3) survenant lorsque le moteur (1) est démarré par un deuxième dispositif de démarrage (5) qui démarre le moteur (1) en réponse à une condition prescrite d'annulation d'arrêt au ralenti par transmission d'énergie au moteur (1) ;
l'estimation d'une tension minimale de la batterie (3) prévue pour survenir lorsque le moteur (1) est démarré avec le deuxième dispositif de démarrage (3) sur la base de la différence de tension stockée et la tension minimale de la batterie (3) détectée à un temps auquel le moteur (1) est démarré par le premier dispositif de démarrage (2) ; et
l'interdiction de démarrage du moteur (1) par le deuxième dispositif de démarrage (5) en réponse à la condition d'annulation d'arrêt au ralenti si la tension de batterie minimale estimée est égale à ou inférieure à une tension de batterie prescrite.
